# EUROPEAN PATENT APPLICATION

(11) **EP 1 420 323 A1**
(43) Date of publication of application: **19.05.2004**
(21) Application number: 02079781.7
(22) Date of filing: 18.11.2002
(51) Int. Cl.: G06F 1/00

(54) **Method and system for distribution of software components**

(71) Applicant: Koninklijke KPN N.V., 9726 AE Groningen (NL)
(72) Inventor: Kleinhuis, Geert, 9264 TX Eernewoude (NL); Joosten, Hendrikus Johannes Maria, 9301 LZ Roden (NL); Knobbe, Jan-Wiepke, 9745 DA Groningen (NL)
(74) Representative: Prins, Adrianus Willem, Mr. Ir.

(57) **Abstract**

Method for distribution of software components, comprising the steps of (a) deriving a software component identifier from each relevant relevant software component, (b) putting the relevant software component to an integrity test, (c) creating, by a certificate issuer (5), an integrity certificate comprising integrity test data labeled with the relevant software component's identifier and (d) register, in a certificate register (4), the integrity certificate of the relevant software component. Subsequent steps are (e) deriving, by a user (3), the software component identifier from a selected software component, (f) retrieving, from the certificate register, the integrity certificate of the selected software component guided by its software component identifier, and (g) evaluating the integrity test data as comprised by the integrity certificate of the selected software component. The identifiers and the integrity certificates of all relevant software components preferrably are registered in a certificate register and wherein the integrity certificate of the selected software component is retrieved from said certificate register. Additionally, the identity of the certificate issuer may be verified, e.g. by checking the issuer's digital signature.

## Description

### Field of the invention

The invention refers to a method and system for distribution of software components.

### Background

Currently, several hundred-billion dollars are lost annually caused by malfunctioning software components. While distribution of software components, e.g. via the internet, is a generally accepted practice, methods that guarantee proper execution of the software without damaging the user's system e.g. PC, are inadequate.

The following is known in this respect:
1. The relevant component provider signs its software component using a digital certificate (e.g. Microsoft's "Authenticode"). This known method has several drawbacks:
   - The known certificates do not relate to (the functionality of) the component itself, but certify that it is produced by a manufacturer (e.g. Microsoft).
   - The known certificates do not provide guarantees with respect to the functionality of components, nor do they guarantee that the component implements such functionality correctly. The known certificates may be created by a manufacturer that the end user does not trust.
2. The component executes within 'environment software' that provides an execution environment for such components so as to limit and control what components can do. Examples of 'environment software' are: the Java Virtual Machine, the Visual Basic Runtime environment, the Flash environment. This has the following drawbacks:
   - It is hard (if not impossible) for an end-user to find out what functionalities an active component can and cannot use within such an execution environment. Consequently, an end-user cannot determine the risks he runs by executing components.
   - There is no guarantee that the execution environment in fact implements its alledged functionality, nor that it prevents any other functionality from executing.
   - The environment software itself can be seen as an active component. For such components there is no environment software (other than the operating system) that might guarantee that it only does what it is supposed to do.
3. Components tend to more and more include functionality that serves the interest of the component provider, but jeopardizes the interests of the end-user (spy-ware). The component provider would have no problem signing this software, but still the user may not appreciate such functionality as it infringes his privacy.
4. The component provider has some kind of version control in place, and lets executing components check for updates on a regular basis, for the purpose of patching the software in case a security flaw would be detected. While this is useful for the component provider, this method is an 'a posteriori' means of achieving integrity that the user would have expected to have been there already.
5. Methods that guarantee the integrity of hardware or other tangible products already exist (e.g. the Common Criteria certification procedures). However, this is not an on-line, real-time solution for software components to be used in operational environments.

### Summary

One aspect of the present invention is to present a method for distribution of software components wherein a software component identifier may be derived from each relevant software component -the software components being issued by respective software component issuers- and wherein, subsequently, each relevant software component is put to an integrity test. Resulting from the integrity test a digital integrity certificate may be issued, by a (trusted) certificate issuer (certificate originator), comprising integrity test data labeled with the relevant software component's identifier. The identifier and the integrity certificate of the tested software component may be registered e.g. in a certificate register.

A user, intending to use a certain software component, may select that software component and derive its software identifier, e.g. by computing the software file's secure hash value or digest, i.e. the fixed-length result of a one-way hash function [1]. From the certificate register the integrity certificate of the selected software component may be retrieved, inspected and evaluated manually or e.g. by the user's client software. The decision whether or not to execute the software component, may be based on the result of such evaluation.

Preferably, the identity of the certificate issuer may be verified by the user, e.g. by checking the issuer's digital signature. A digital signature guarantees that a signed file (data) has not been altered, as if it were carried in an electronically sealed envelope. The "signature" is an encrypted digest (one-way hash function) of the file. The recipient extracts the digest from the certificate that was sent and also recomputes the digest from the received file. If the digests match, the file is proved intact and tamper free from the sender [2]. The certificate issuer may be indicated as "trusted certificates originator".

Another aspect is that the user may set preferred (e.g minimum) requirements concerning the software component's integrity. The retrieved integrity certificate then may be matched to the user's preferred requirements and preferrably reported to the user.

The integrity certificate comprises data referring to the software component's integrity, e.g. comprising a rating of its quality with respect to items like robustness, reliability, soundness, completeness etc.. Preferrably use may be made of the "Common Criteria" (CC). The CC represents the outcome of a series of efforts to develop criteria for evaluation of IT security that are broadly useful within the international community. In the early 1980's the Trusted Computer System Evaluation Criteria (TCSEC) was developed in the United States. In the succeeding decade, various countries began initiatives to develop evaluation criteria that built upon the concepts of the TCSEC but were more flexible and adaptable to the evolving nature of IT in general. In Europe, the Information Technology Security Evaluation Criteria (ITSEC) version 1.2 was published in 1991 by the European Commission after joint development by the nations of France, Germany, the Netherlands, and the United Kingdom. In Canada, the Canadian Trusted Computer Product Evaluation Criteria (CTCPEC) version 3.0 was published in early 1993 as a combination of the ITSEC and TCSEC approaches. In the United States, the draft Federal Criteria for Information Technology Security (FC) version 1.0 was also published in early 1993, as a second approach to combining North American and European concepts for evaluation criteria. Work had begun in 1990 in the International Organisation for Standardisation (ISO) to develop a set of international standard evaluation criteria for general use. The new criteria (CC) was to be responsive to the need for mutual recognition of standardised security evaluation results in a global IT market [4].

Another aspect is to retrieve the requested integrity certificates from a certificate register. The certificate register may reside in the user's client software, browser, e-mail client etc. As an alternative, the requested integrity certificates may be retrievable from a register (e.g database) of e.g. the certificates originator. The integrity certificate may even be received from the software supplier itself. Whatever the register's location may be, it is important that the integrity certificate always has to be issued (originated) by a reliable and unprejudiced party, i.e. trusted certificates originator. So the integrity certificate always has to be verified to be issued by one of the trusted certificates originators. To that end the user client software may comprise a register containing public key (PK) certificates of one or more certificates originators that can be trusted. Additionally, the trusted certificates originator's digital signature may be verified with a(nother) trusted third party.

The method according the invention in an aim aims to evaluate software components against well-defined specifications using well-defined evaluation m ethods. Integrity data of software components may be assigned by means of integrity certificates, made according to a well-defined scale of integrity-levels. Each certificate may comprise data about e.g. the evaluation method, the scale used, etc. Users (or systems) requesting an integrity certificate for a given software component thus are enabled to verify the integrity of said software component before installation or execution.

### Drawings

Figure 1 shows schematicly an architecture in which the invention may be executed.
Figure 2 shows a prior-art screen dump (Microsoft's © Authenticode ©) for input and/or modification of security settings for new software components.

### Exemplary embodiments

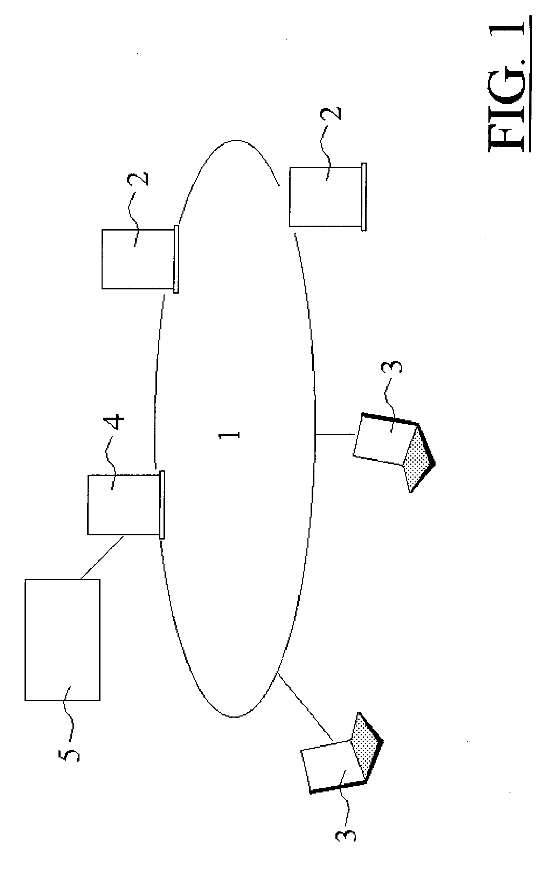

Figure 1 shows a network 1, e.g. the Internet, to which several content servers 2 and terminals (client or user computers) 3 are connected. Besides, a certificates server 4 is connected to the network 1. The certificates server 4 may be connected to a (trusted) certificates originator 5. Certificates made by the certificates originator 5 may be registered in a certificates register within or labeled with server 4.

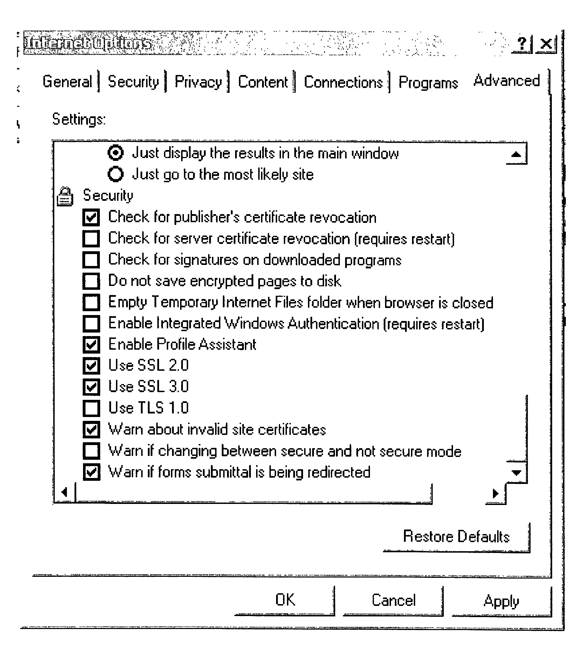

According to the state-of-the-art, the client terminals 3 have the capability to select, download and execute software components. Each terminal 3 may download selected software (or other content) from the servers 2, e.g. via the network address http://www.shareware.com. Before downloading the software, the terminal's client software may ask whether or not the software supplier can be trusted, e.g. via the user client's settings, e.g. as shown in figure 2.

Distribution of software components via the distribution network 1 goes as follows.

The user 3, intending to use a certain software component, e.g. a program called INVENT, issued by unknown publisher, will try to download the relevant program files, e.g. comprised by a self-executing ZIP file called INVENT.EXE. Before installing and executing the program after having downloaded the file INVENT.EXE, the user may wish to know some more about the program's quality, integrity , reliability etc., to prevent or at least to reduce the chance that the program exhibits undesired behaviour at the user's computer 3.

Computer 3 comprises -may be in the form of a plug-in the computer's internet browser or mail client- a utility which is able to calculate a secure hash or digest of the INVENT.EXE file, e.g. a 160-bits hash, which serves as a unique software component identifier of the downloaded INVENT.EXE file.

Subsequently, the user transmits via the internet 1 the calculated identifier to a trusted certificates originator, via the certificates server 4, requesting, by retrieving in the server's register, an integrity certificate which matches with the identifier.

If server 4 indeed finds an integrity certificate (or more integrity certificates) labeled with the software identifier, the certificate(s) may be downloaded to the user's computer 3. The user then may be able to read and evaluate the integrity test data as comprised by the integrity certificate(s) of the selected software component, retreived from the certificate register.

The integrity certificate may comprise a digital signature, proving the source of the certificate. Use may be made of signing the certificate by e.g. by using the Digital Signature Algorithm (**FIPS 186-2**, *Digital Signature Standard (DSS)*) thus enabling the receiving user to detect whether the certificate was issued by the trusted certificates originator, viz. by checking the digital signature on the certificate.

To be able to distribute integrity certificates of several software components, server 4 has to maintain a register -e.g. a database- comprising integrity certificates -e.g. made by an independent software testing agency (certificates originator 5) like e.g. National Software Testing Labs (NSTL) [5] or iBeta Software Quality Assurance [6] or TNO [7].

Each integrity certificate -comprising test data, reflecting the results of the testing efforts like CC tests etc.- is labeled with a unique software component identifier, formed by the hash value resulting from e.g. a secure 160 bits hash function. Both the test results -registered as integrity certificate- and the hash identifier are mutually linked and registered in the database of server 4. Optionally, the relevant software's integrity certificates and their linking identifiers may (also) be registered in other servers, e.g. in the software supplier servers 2, and/or even in the terminals 3 e.g. the certificates of software components which optionally (not yet installed) may be used e.g. as plug-ins etc. in the user terminal's client software like browsers etc.

In each case, in whatever location or server a integrity certificate may be registered, the certificate issuer always has to be an independent, trusted certificates originator. For that reason it may be very important to verify, by the user, the identity of the certificate issuer, e.g. by checking the issuer's digital signature.

Finally, after having received the relevant integrity certificate(s) -including a check to its origin- the contents of each certificate may be inspected and evaluated by the user personally. Optionally the user may having set preferred (e.g. minimum) requirements concerning the software component's integrity. E.g. an additional client plug-in may be enabled for matching the retrieved integrity certificate to the user's preferred requirements.

It is noted that software component distributors (servers 2) may offer the service to distribute their software components in a software package including the relevant integrity certificate, e.g. including the certificate within the (see the above example) INVENT.EXE (self-executable) ZIP file. In that case the user only needs to compute the file's hash value and to check whether the integrity certificate is linked indeed to that hash value and to check whether te certificate is originated by a trusted certificates originator.

It is also noted that the presented method may be applied when software components are distributed via a distribution network like the internet, or via more conventional distribution means, viz. via physical distribution of CD's (or diskettes) comprising the relevant software. As stated above, the software certificate might be included in the software package of the CD or diskettes. In the way as depicted above, the user is enabled to calculate the software component's identifier and to verify and evaluate the certificate's content.

### References

1. http://lookup.atomica.com/atomica2/query?s=hash value (© Computer Language Company Inc)
2. http://lookup.atomica.com/atomica2/query?s=digital signature (© Computer Language Company Inc)
3. http://www.columbia.edu/acis/rad/ columbiaca/more-info-cas.html
4. http://www.commoncriteria.org/docs/origins.html
5. http://www.nstl.com/
6. http://www.ibeta.com/
7. http://www.tno.nl

## Claims

1. Method for distribution of software components, comprising the steps of
- deriving a software component identifier from each relevant relevant software component;
- putting the relevant software component to an integrity test;
- creating, by a certificate issuer (5), an integrity certificate comprising integrity test data labeled with the relevant software component's identifier;
- register, in a certificate register (4), the integrity certificate of the relevant software component;
- deriving, by a user (3), the software component identifier from a selected software component;
- retrieving, from the certificate register, the integrity certificate of the selected software component guided by its software component identifier;
- evaluating the integrity test data as comprised by the integrity certificate of the selected software component.

2. Method according to claim 1, wherein the identifiers and the integrity certificates of all relevant software components are registered in a certificate register and wherein the integrity certificate of the selected software component is retrieved from said certificate register.

3. Method according to claim 1, comprising the step of verifying, by the user, the identity of the certificate issuer.

4. Method according to claim 3, wherein the identity of the certificate issuer is verified by checking the issuer's digital signature.

5. Method according to claim 1, comprising the steps of
- setting, by the user, preferred requirements concerning the software component's integrity;
- matching the retrieved integrity certificate to the user's preferred requirements.

6. Method according to claim 1, wherein the characteristics as read from the certificate are reported to the user.

7. Method according to claim 5, wherein the matching results are reported to the user.

8. Method according to claim 1, wherein the software component identifier comprises a hash value of the component's file or files.

9. Method according to claim 1, wherein the relevant integrity certificate is retrieved from a register at the user's side.

10. Method according to claim 1, wherein the relevant integrity certificate is retrieved from a supplier of the relevant software component.

11. Method according to claim 1, wherein the relevant integrity certificate is retrieved from a trusted certificates originator

12. Method according to claim 11, wherein the trusted third party is retrieved by matching with a register at the user's side containing one or more trusted certificates originators.
